# EUROPÄISCHE PATENTSCHRIFT

(11) **EP 2 548 444 B1**
(45) Veröffentlichungstag und Bekanntmachung des Hinweises auf die Patenterteilung: **31.08.2016**
(21) Anmeldenummer: 12176147.2
(22) Anmeldetag: 12.07.2012
(51) Int. Cl.: A22B 5/00, G01G 11/12, G01G 19/06

(54) **Verfahren und Anordnung zum Wiegen von Schlachttieren**
Assembly and method for weighing animals for slaughter
Procédé et dispositif de pesage d'animaux d'abattage

(30) Priorität: 18.07.2011 DE 102011051895
(43) Veröffentlichungstag der Anmeldung: 23.01.2013
(73) Patentinhaber: BANSS SCHLACHT- UND FÖRDERTECHNIK GMBH, 35216 Biedenkopf (DE)
(72) Erfinder: Weide, Harald, 35216 Biedenkopf (DE); Bende, Michael, 35216 Biedenkopf (DE)
(74) Vertreter: Stoffregen, Hans-Herbert

(56) Entgegenhaltungen:
- EP-A1- 2 336 735
- AT-U1- 4 038
- FR-A1- 2 663 418

## Beschreibung

Die Erfindung bezieht sich auf ein Verfahren zum Wiegen von Schlachttieren oder Teilen dieser, die im Abstand x zueinander beabstandet entlang eines Förderwegs gefördert werden, wobei der Förderweg zumindest einen ein Wiegeelement enthaltenden Abschnitt aufweist und jedes Schlachttier oder Teil dieses entlang des Abschnitts oder eines Wiegebereichs des Abschnitts mit einer mittleren Geschwindigkeit V₁ gefördert wird.

Ferner nimmt die Erfindung Bezug auf eine Anordnung zum Wiegen von Wiegegütern wie Schlachttieren oder Teilen dieser, umfassend eine Förderbahn, wie Rohrbahn, mit zugeordnetem ersten Förderer, wie Kettenförderer, mittels dessen die im Abstand x zueinander von der Förderbahn ausgehenden, insbesondere herabhängenden Schlachttieren oder Teilen dieser förderbar sind, wobei zumindest ein Abschnitt der Förderbahn ein Wiegeelement, wie einen Wiegebalken, aufweist, entlang dessen die Schlachttiere oder Teile dieser vorzugsweise über einen synchron mit dem ersten Förderer bewegbaren und in dem Wiegeelement integrierten zweiten Förderer bei gleichzeitiger Entkopplung zu dem ersten Förderer förderbar sind.

In modernen Schlachtanlagen erfolgt ein weitgehend vollautomatisiertes Schlachten von Tieren und deren Bearbeitung. Hierzu werden die Schlachttiere entlang einer Förderbahn gefördert, um Bearbeitungsstationen zu durchlaufen, in denen mit Robotern ein Bearbeiten erfolgen kann.

Um das Gewicht des Schlachttieres zu erfassen, ist es bekannt, in einem Abschnitt des Förderwegs einen Wiegebalken anzuordnen bzw. einen Abschnitt als Wiegebalken auszubilden. Nach dem Stand der Technik wird aufgrund von Eichverfahren die maximale Geschwindigkeit beim Wiegen limitiert. Höhere Geschwindigkeiten können zu Messverfälschungen führen, insbesondere dadurch, dass das die Verweilzeit auf der Waage zu kurz ist.

Um zu vermeiden, dass eine Gewichtsverfälschung dadurch erfolgt, dass durch den das Schlachttier entlang des Förderwegs transportierenden Förderer Horizontalkräfte auf die Schlachttiere einwirken, erfolgt im Bereich des Wiegebalkens ein Entkoppeln von dem Hauptförderer und ein dem Wiegebalken zugeordneter weiterer Förderer, insbesondere ein in dem Wiegebalken integrierter Förderer übernimmt den Transport des Schlachttieres. Dabei sind der integrierte Förderer und der Hauptförderer synchronisiert.

Aus dem Stand der Technik ist es auch bekannt, neben einer Hauptmesswaage eine Notmesswaage in dem Förderweg anzuordnen, die dann benutzt wird, wenn die von der Hauptmesswaage ermittelten Ergebnisse als fehlerhaft bewertet werden. Im Bereich der Notwaage wird üblicherweise das Schlachttier im Stillstand gewogen, so dass infolgedessen zuvor ein Abbremsen und sodann ein Beschleunigen des Schlachttiers erfolgt.

Eine Vorrichtung zum hängenden Transportieren von Schlachttieren und Wiegen dieser ist der DE 28 18 024 A1 zu entnehmen.

Eine Hängebahnwaage, bestehend aus einer rohrförmigen Wägeschiene, die zwischen einer von Haken befahrbaren Rohrbahn angeordnet ist, wird in der AT 004 038 U1 beschrieben. Die Rohrbahn dient dem Transport von Haken, in denen insbesondere Fleischteile von Tieren eingehakt sind.

Der EP 2 336 735 A1 oder der FR 2 663 418 A1 sind Fördervorrichtungen zu entnehmen, die in einem Förderweg Wiegezellen aufweisen, um entlang des Förderwegs zu transportierende Güter zu wiegen.

Der vorliegenden Erfindung liegt die Aufgabe zu Grunde, ein Verfahren und eine Anordnung der eingangs genannten Art so weiterzubilden, dass im Vergleich zum Stand der Technik, nach dem im Förderweg des Schlachttieres oder eines Teils von diesem ein Wiegen erfolgt, ein höherer Durchsatz erzielt werden kann, ohne dass die einzuhaltenden Transportgeschwindigkeiten innerhalb des Bereichs, in dem ein Wiegen erfolgt, überschritten werden müssen.

Zur Lösung der Aufgabe wird verfahrensmäßig im Wesentlichen vorgeschlagen, dass das Schlachttier oder ein Teil von diesem außerhalb des ein Wiegeelement aufweisenden zumindest einen Abschnitts oder des Wiegebereichs mit einer im Vergleich zu der mittleren Geschwindigkeit V₁ höheren mittleren Geschwindigkeit V₂ gefördert wird. Dies bedeutet, dass dann, wenn in dem Förderweg ein einziger Abschnitt mit einem Wiegeelement vorhanden ist, die Länge des Abschnitts bzw. des Bereichs des Abschnitts, in dem eine vorgegebene Maximalgeschwindigkeit zum ordnungsgemäßen Wiegen nicht überschritten werden darf, kleiner als der Abstand von zwei aufeinanderfolgenden Schlachttieren bzw. Teilen dieser ist, die vorzugsweise an Haken herabhängend entlang des Förderwegs gefördert werden.

Nachstehend wird bei der Erläuterung der Erfindung -jedoch nicht schutzeinschränkend -beschrieben, dass das Wiegegut hängend entlang des Förderwegs bewegt wird.

Insbesondere ist vorgesehen, dass die mittlere Geschwindigkeit V₂ beträgt 1.05 V₁ ≤ V₂ ≤ 4,35 V₁, so dass das Schlachttier außerhalb des das Wiegeelement aufweisenden zumindest einen Abschnitts bzw. des Wiegebereichs mit einer im Vergleich zu der mittleren Geschwindigkeit V₁ höheren mittleren Geschwindigkeit V₂ gefördert wird.

Bevorzugterweise ist vorgesehen, dass in dem Förderweg n-Abschnitte mit n ≥ 2 vorgesehen sind, wobei in jedem Abschnitt ein Wiegeelement vorhanden ist.

Insbesondere zeichnet sich die Erfindung jedoch dadurch aus, dass bei unmittelbar aneinandergereihten n-Abschnitten mit einem Abstand z von Mitte zu Mitte von aufeinanderfolgenden Abschnitten bzw. deren Wiegeelementen erste n-Schlachttiere oder Teile dieser gleichzeitig gewogen werden und dass nach dem Wiegen die Schlachttiere oder Teile dieser mit der zweiten mittleren Geschwindigkeit V₂ über eine Förderstrecke n · z gefördert werden und sodann zweite n-Schlachttiere oder Teile dieser in den n-Abschnitten gleichzeitig gewogen werden, wobei z = x ist, also gleich dem Abstand zweier aufeinanderfolgender entlang des Förderwegs geförderter Schlachttiere bzw. Teile dieser.

Durch die diesbezüglichen Maßnahmen ist ein höherer Durchsatz im Vergleich zum Stand der Technik erzielbar, der bis zu 50 % betragen kann.

Des Weiteren sieht die Erfindung nach einer weiteren hervorzuhebenden Ausführungsform vor, dass in dem Förderweg n-Abschnitte mit n ≥ 2 mit jeweils einem Wiegeelement angeordnet werden, dass zwei aufeinander folgende Abschnitte bzw. deren Wiegeelemente von Mitte zu Mitte in einem Abstand (n + N) · x mit N = ungerade natürliche Zahl (1, 3, 5...), insbesondere N = 1, zueinander angeordnet werden und dass nach jedem Wiegen die Schlachttiere oder Teile dieser über eine Förderstrecke n · x mit der zweiten mittleren Geschwindigkeit V₂ gefördert werden. Durch diese Maßnahmen ist eine erhebliche Durchsatzsteigerung möglich.

Eine Anordnung der eingangs genannten Art zeichnet sich dadurch aus, dass n-Abschnitte mit n ≥ 1 jeweils ein Wiegeelement aufweisen, dass bei n = 1 Länge y des Abschnitts bzw. einer in diesem verlaufenden Wiegestrecke beträgt y < x, dass bei unmittelbar aufeinanderfolgend angeordneten Abschnitten Abstand z von Mitte zu Mitte von zwei aufeinanderfolgenden Abschnitten bzw. deren Wiegeelementen beträgt z = x und dass bei zueinander beabstandeten Abschnitten der Abstand u zwischen zwei aufeinander folgenden Abschnitten bzw. deren Wiegeelementen von Mitte zu Mitte beträgt u = (n + N) · x mit N = ungerade natürliche Zahl (N = 1, 3, 5...), wobei insbesondere N = 1 ist.

Weitere Einzelheiten, Vorteile und Merkmale der Erfindung ergeben sich nicht nur aus den Ansprüchen, den diesen zu entnehmenden Merkmalen, - für sich und/oder in Kombination-, sondern auch aus der nachfolgenden Beschreibung von der Zeichnung zu entnehmenden bevorzugten Ausführungsbeispielen.

Es zeigen:
- Fig. 1 bis 7: Prinzipdarstellungen des Förderablaufs von Schlachttieren zum Wiegen dieser,
- Fig. 8 bis 10: Wegzeitdiagramme und
- Fig. 11: eine Prinzipdarstellung einer Schlachtstraße im Ausschnitt.

Die Erfindung wird nachstehend anhand des Wiegens von Schlachttieren beschrieben, gleichwenn hierdurch eine Beschränkung der erfindungsgemäßen Lehre nicht erfolgt. Anstelle von Schlachttieren können auch Teile von Schlachttieren transportiert werden. Ganz allgemein gilt auch, dass das Wiegegut entlang eines Förderwegs gefördert wird, wobei insbesondere von einem Fördern eines von einer Förderbahn herabhängenden Wiege guts auszugehen ist, ohne dass hierdurch eine Beschränkung der erfindungsgemäßen Lehre erfolgt.

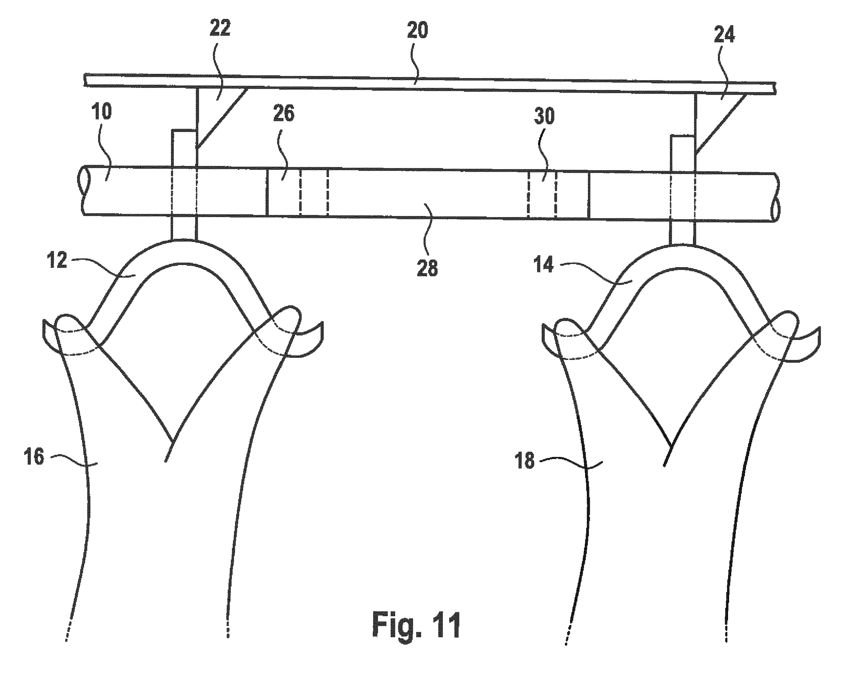

In Fig. 11 ist rein prinzipiell ein Ausschnitt einer Schlachtstraße dargestellt, in der entlang einer einen Förderweg bildenden Rohrbahn 10 von Haken 12, 14 herabhängende Schlachttiere 16, 18 mittels eines ersten Förderers 20 oder Hauptförderers transportiert werden. Hierzu gehen von dem ersten Förderer 20 Mitnehmer 22, 24 aus, die mit den Haken 12, 14 in bekannter Weise wechselwirken.

In der Rohrbahn 10 ist ein Abschnitt 26 vorhanden, der ein Wiegeelement in Form eines Wiegebalkens 28 aufweist. Ferner ist in dem Abschnitt 26 ein Förderer 30 integriert, um entlang des Wiegebalkens 28 die Haken 12, 14 und damit die Schlachttiere 16, 18 unabhängig von dem Förderer 20 zu fördern. Hierdurch bedingt wirken auf die Schlachthaken 12, 14 und damit die Schlachttiere 16, 18 keine zu Messverfälschungen führende Horizontalkräfte von dem Hauptförderer ein. Der in dem Abschnitt 26 integrierte Förderer 30 wird synchron mit dem Hauptförderer bewegt.

Um Messverfälschungen während des Wiegens zu unterbinden, dürfen die Schlachttiere 16, 18 dann, wenn sie entlang des Wiegebalkens 28 gefördert werden, eine maximale Fördergeschwindigkeit nicht überschreiten. Diese kann z. B. bei bei 200 mm /sec liegen. Die Wiegestrecke, innerhalb der die diesbezügliche Maximalgeschwindigkeit eingehalten werden muss, kann z. B. 500 mm betragen. Weisen die Schlachttiere bzw. die Haken 12, 14 einen Mindestabstand von z. B. 800 mm auf, so beträgt der Durchsatz durch eine entsprechende Schlachtstraße 900 Tiere pro Stunde.

Um den Durchsatz zu erhöhen, ohne dass die zulässige Maximalgeschwindigkeit während des Wiegens, also innerhalb der Wiegestrecke überschritten wird, d. h., die erforderliche Wiegezeit wird nicht unterschritten, ist erfindungsgemäß vorgesehen, dass die Schlachttiere 16, 18 außerhalb der Wiegestrecke, die aus Gründen der Vereinfachung mit der Länge des Abschnitts 26 gleichgesetzt wird, mit einer höheren mittleren Geschwindigkeit V₂ gefördert werden als innerhalb der Wiegestrecke, in der die mittlere Geschwindigkeit V₁ beträgt.

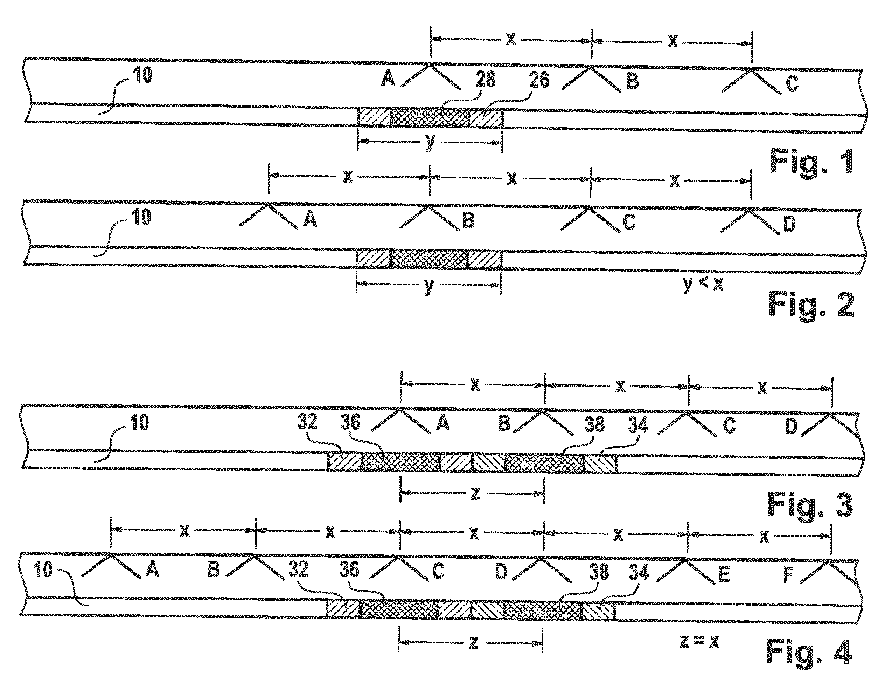

Dies soll anhand der Fig. 1 bis 10 verdeutlicht werden. Dabei sind die der Fig. 11 zu entnehmenden Bezugszeichen in den weiteren Figuren berücksichtigt.

Die Fig. 1 zeigt prinzipiell die Rohrbahn 10 mit dem Abschnitt 26, der den Wiegebalken 28 bzw. Wiegestrecke enthält. Die Haken 12, 14 sind aus Gründen der Übersichtlichkeit oberhalb der Rohrbahn 10 prinzipiell dargestellt und mit den Buchstaben A, B, C... gekennzeichnet. Der Abstand unmittelbar aufeinanderfolgender Schlachthaken A, B bzw. B, C ... beträgt x. Die Länge des Abschnitts 26 bzw. des Bereichs des Abschnitts 26, in dem die Maximalgeschwindigkeit zum Fördern der Schlachttiere 16, 18 zur Erzielung eines verwertbaren Wiegemessergebnisses nicht überschritten wird, ist kürzer als der Abstand x. Somit können die Schlachttiere über die Strecke x - y mit einer höheren mittleren Geschwindigkeit V₂ gefördert werden, als in dem Abschnitt 26 bzw. der Wiegestrecke.

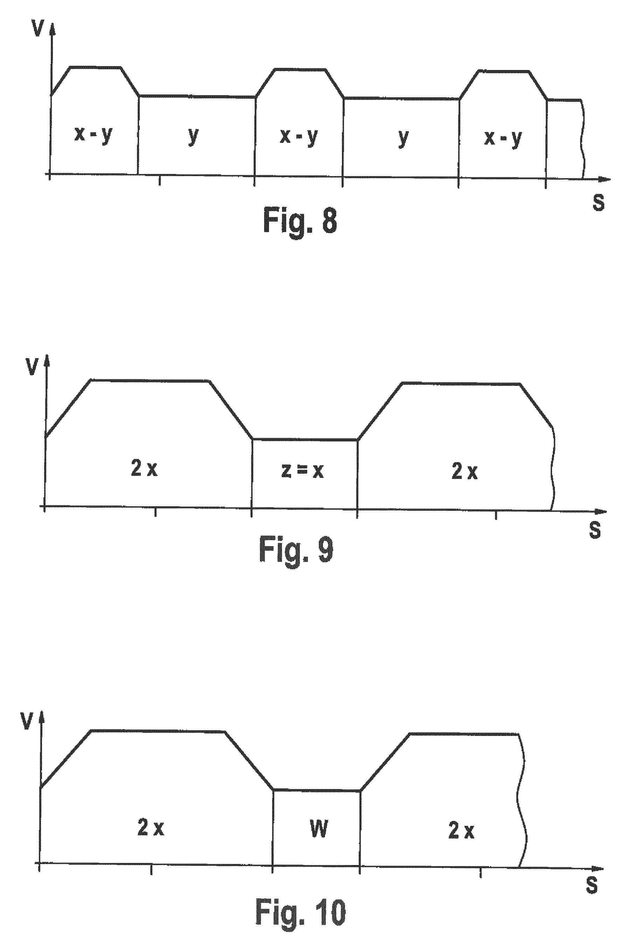

Das entsprechende Geschwindigkeitsprofil über den Weg s ist der Fig. 8 zu entnehmen. Es ist erkennbar, dass außerhalb der dem Abschnitt 26 zugordneten Strecke y, also über die Strecke x - y, die mittlere Geschwindigkeit V₂ größer als die mittlere Geschwindigkeit V₁ entlang der Strecke y ist, in der die Maximalgeschwindigkeit nicht überschritten werden darf. Somit ergibt sich insgesamt eine gesamte mittlere Geschwindigkeit während des Förderns, die größer als die Maximalgeschwindigkeit in dem Abschnitt 26 bzw. der Wiegestrecke ist mit der Folge, dass ein höherer Durchsatz erzielbar ist.

Anhand der Fig. 3 und 4 sowie Fig. 9 soll prinzipiell verdeutlicht werden, dass ein noch höherer Durchsatz erzielbar ist, wenn zwei Abschnitte 32, 34 mit integrierten Wiegeelementen wie Wiegebalken 36, 38 unmittelbar aufeinanderfolgend angeordnet sind, wobei der Abstand Mitte zu Mitte der Wiegebalken 36, 38 mit z gekennzeichnet ist. Der Abstand z ist dabei gleich dem Abstand x, also dem Abstand von aufeinanderfolgenden Haken A, B bzw. B, C etc. Bei einer entsprechenden Anordnung erfolgt ein Wiegen wie folgt.

Entsprechend der Fig. 3 werden zunächst die von den Haken A, B herabhängenden Schlachttiere gewogen. Sodann erfolgt eine beschleunigte Bewegung über eine Strecke 2 · x, um den Haken C auf den Abschnitt 32 und damit den Wiegebalken 36 und den Haken D auf den Abschnitt 34 und damit den Wiegebalken 38 zum Wiegen der Schlachttiere auszurichten. Dies zeigt ein Vergleich der Fig. 3 und 4. Es ergibt sich ein Geschwindigkeitsprofil für die geförderten Schlachttiere entsprechend der Fig. 9.

Über eine Strecke von zumindest 2 x ergibt sich eine höhere mittlere Geschwindigkeit V₂ als während des Wiegens. Aus Gründen der Vereinfachung sind in Fig. 8 die unterschiedlichen Geschwindigkeitsbereiche mit 2 x und z gekennzeichnet.

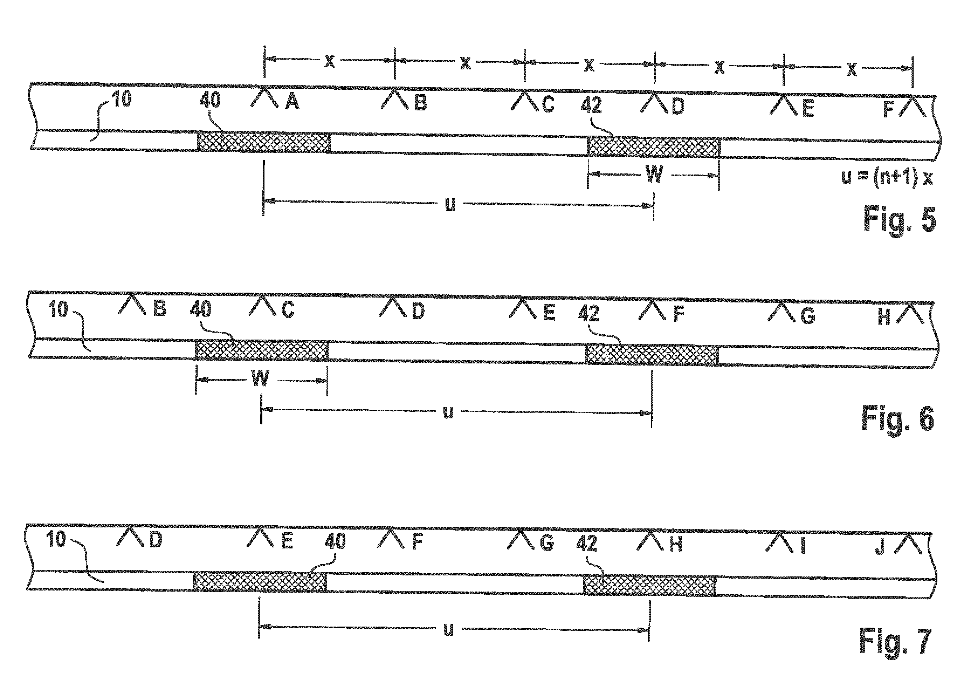

Ein ggfs. noch höherer Durchsatz lässt sich erzielen, wenn mehr als zwei Abschnitte zueinander beabstandet sind. Das dabei zur Anwendung gelangende Wiegeprinzip soll anhand der Fig. 5 bis 7 veranschaulicht werden, und zwar aus Gründen der Vereinfachung mit zwei Abschnitten 40, 42. Ferner wird angenommen, dass sich die Wiegestrecke über die gesamte Länge des jeweiligen Abschnitts 40, 42 erstreckt, wenngleich die Wiegestrecke grundsätzlich kürzer als der jeweilige Abschnitt 40, 42 ist.

Im Ausführungsbeispiel der Fig. 5 und 7 sind in der Rohrbahn 10 erwähntermaßen zwei Abschnitte 40, 42 mit jeweils einem Wiegeelemente angeordnet. Die Abschnitte 40, 42 sind erfindungsgemäß derart angeordnet, dass der Abstand u der Abschnitte 40, 42 von Mitte zu Mitte gleich 3x mit x = Abstand von aufeinanderfolgenden Haken A, B bzw. B, C etc. sind.

Bei einer entsprechenden Anordnung erfolgt das Fördern der Schlachttiere wie folgt: Es werden die Schlachttiere, die von den Haken A und D herabhängen, in den Abschnitten 40, 42 gewogen. Sodann erfolgt eine Beschleunigung über eine Strecke von 2 x, um die von den Haken C und F herabhängenden Schlachttiere zu wiegen. Dabei ist der Haken E über den Abschnitt 42 gefördert worden, ohne dass ein Wiegen erfolgte. Dies ergibt sich aus der Fig. 6. Sodann erfolgt nach dem Wiegen ein erneutes Beschleunigen um 2 x derart, dass der Haken E auf den Abschnitt 40 und der Haken H auf den Abschnitt 42 ausgerichtet ist, um ein Wiegen zu ermöglichen. Innerhalb des jeweiligen Abschnitts 40, 42 über eine Länge W, die der Wiegestrecke entspricht und der Länge des Abschnitts 40, 42 entsprechen kann, werden die Schlachttiere mit den in dem Abschnitt 40, 42 integrierten Förderer transportiert, wobei ein Ausgriff mit dem Hauptförderer 20 gegeben ist.

Sind mehr als zwei Abschnitte in der Rohrbahn 10 vorhanden, die integral Wiegeelemente wie Wiegebalken aufweisen, werden die Schlachttiere über eine Strecke, die gleich Anzahl n der Wiegebalken multipliziert mit dem Abstand x der aufeinanderfolgenden Haken A, B etc. ist, nach jedem Wiegevorgang wieder beschleunigt, also mit einer höheren mittleren Geschwindigkeit V₂ transportiert, wobei der Abstand aufeinanderfolgender Wiegeelemente (n + N) · x ist. Dabei ist N eine ungerade natürliche Zahl beginnend mit 1, also N = 1, 3, 5 .... Bevorzugterweise ist N = 1.

## Patentansprüche

1. Verfahren zum Wiegen von Schlachttieren (16, 18) oder Teilen dieser, die im Abstand x zueinander beabstandet entlang eines Förderwegs gefördert werden, wobei der Förderweg zumindest einen ein Wiegeelement enthaltenden Abschnitt (26) aufweist und jedes Schlachttier oder Teil dieses entlang des Abschnitts oder eines Wiegebereichs des Abschnitts mit einer mittleren Geschwindigkeit V₁ gefördert wird,
**dadurch gekennzeichnet,**
**dass** das Schlachttier (16, 18) oder Teil dieses außerhalb des ein Wiegeelement aufweisenden zumindest einen Abschnitts (26) oder des Wiegebereichs mit einer im Vergleich zu der mittleren Geschwindigkeit V₁ höheren mittleren Geschwindigkeit V₂ gefördert wird.

2. Verfahren nach Anspruch 1,
**dadurch gekennzeichnet,**
**dass** die mittlere Geschwindigkeit V₂ beträgt: 1,05 V₁ ≤ V₂ ≤ 4,35 V₁.

3. Verfahren nach Anspruch 1 oder 2,
**dadurch gekennzeichnet,**
**dass** in dem Förderweg n-Abschnitte mit jeweils einem Wiegeelement mit n ≥ 2 angeordnet werden.

4. Verfahren nach zumindest einem der vorhergehenden Ansprüche,
**dadurch gekennzeichnet,**
**dass** bei unmittelbar aneinander gereihten n-Abschnitten mit einem Abstand z von Mitte zu Mitte von aufeinander folgenden Abschnitten bzw. deren Wiegeelementen mit z = x erste n-Schlachttiere oder Teile dieser gleichzeitig gewogen werden und dass nach dem Wiegen die Schlachttiere oder Teile dieser mit der zweiten mittleren Geschwindigkeit V₂ über eine Förderstrecke n · x gefördert werden und sodann zweite n-Schlachttiere oder Teile dieser in den n-Abschnitten gleichzeitig gewogen werden.

5. Verfahren nach zumindest einem der vorhergehenden Ansprüche,
**dadurch gekennzeichnet,**
**dass** in dem Förderweg m-Abschnitte mit jeweils einem Wiegeelement mit m ≥ 2 angeordnet werden, dass zwei aufeinander folgende Abschnitte bzw. deren Wiegeelemente von Mitte zu Mitte in einem Abstand u mit u = (m + N) · x, mit N = ungerade natürliche Zahl, insbesondere N = 1, zueinander angeordnet werden und dass nach jedem Wiegen von m ersten Schlachttieren die Schlachttiere über eine Förderstrecke m · x mit der zweiten mittleren Geschwindigkeit V₂ gefördert werden, um sodann m zweite Schlachttiere zu wiegen.

6. Anordnung zum Wiegen von Schlachttieren (16, 18) oder Teilen dieser, umfassend eine Förderbahn, wie Rohrbahn (10), mit zugeordnetem ersten Förderer (20), wie Kettenförderer, mittels dessen die im Abstand x zueinander von der Förderbahn ausgehenden, insbesondere herabhängenden Schlachttieren oder Teilen dieser förderbar sind, wobei zumindest ein Abschnitt (26) der Förderbahn ein Wiegeelement, wie Wiegebalken, aufweist, entlang dessen die Schlachttiere oder Teile dieser vorzugsweise über einen synchron mit dem ersten Förderer bewegbaren und dem Wiegeelement zugeordneten, insbesondere in dem Wiegeelement integrierten zweiten Förderer (30) bei gleichzeitiger Entkopplung zu dem ersten Förderer förderbar sind,
**dadurch gekennzeichnet,**
**dass** n-Abschnitte mit n ≥ 1 jeweils ein Wiegeelement (28) aufweisen, dass bei n = 1 Länge y des Abschnitts (26) oder einer in diesem verlaufenden Wiegestrecke beträgt y < x, dass bei unmittelbar aufeinanderfolgend angeordneten Abschnitten Abstand z von Mitte zu Mitte der in den aufeinander folgenden Abschnitten integrierten Wiegeelemente beträgt z = x und dass bei zueinander beabstandeten Abschnitten Abstand u zwischen zwei aufeinander folgenden Abschnitten von Mitte zu Mitte oder von deren Wiegeelementen von Mitte zu Mitte beträgt u = (n +N) · x, wobei N = ungerade natürliche Zahl mit vorzugsweise N = 1 ist.

## Claims

1. Method for weighing of slaughtered animals (16, 18) or parts thereof conveyed at a distance x apart from one another along a conveying path, where said conveying path has at least one section (26) containing a weighing element and each slaughtered animal or part thereof is conveyed along said section or along a weighing area of said section at a medium speed V₁,
**wherein**
the slaughtered animal (16, 18) or part thereof is conveyed outside the at least one section (26) having a weighing element or outside the weighing area at a medium speed V₂ higher in comparison to the medium speed V₁.

2. Method according to claim 1,
**wherein**
the medium speed V₂ is: 1.05 V₁ ≤ V₂ ≤ 4.35 V₁.

3. Method according to claim 1 or 2,
**wherein**
n-sections each with one weighing element where n ≥ 2 are arranged in the conveying path.

4. Method according to at least one of the preceding claims,
**wherein**
n n-sections in a row directly next to one another at a distance z from centre to centre of consecutive sections or a distance x between their weighing elements where x = z, first n slaughtered animals or parts thereof are simultaneously weighed, and said slaughtered animals or parts thereof are conveyed after weighing at the second medium speed V₂ over a conveying distance n · x and then second n slaughtered animals or parts thereof are simultaneously weighed in the n-sections.

5. Method according to at least one of the preceding claims,
**wherein**
m-sections where m ≥ 2 each with one weighing element are arranged in the conveying path, two consecutive sections or their weighing elements are arranged relative to one another at a distance u from centre to centre where u = (m + N) · x, where N = uneven natural number, in particular N = 1, and after every weighing of m first slaughtered animals said slaughtered animals are conveyed over a conveying distance m · x at the second medium speed V₂, to then weigh m second slaughtered animals.

6. Arrangement for weighing of slaughtered animals (16, 18) or parts thereof, comprising a conveyor track such as a tubular track (10) with associated first conveyor (20) such as a chain conveyor, by means of which the slaughtered animals or parts thereof emerging from the conveyor track, in particular suspended, at a distance x from one another can be conveyed, where at least one section (26) of the conveyor track has a weighing element such as a weighing beam along which the slaughtered animals or parts thereof can be conveyed to the first conveyor preferably via a second conveyor (30) movable synchronously with said first conveyor and associated with the weighing element, in particular integrated into the weighing element and with simultaneous decoupling from the first conveyor,
**wherein**
n-sections where n ≥ 1 each have a weighing element (28), where if n = 1 the length y of the section (26) or of a weighing distance running therein is y < x, when sections are arranged directly consecutive to one another the distance z from centre to centre of the weighing elements integrated into the consecutive sections is z = x, and where sections are spaced apart the distance u between two consecutive sections from centre to centre or between their weighing elements from centre to centre is u = (n +N) · x, where N = uneven natural number with preferably N = 1.

## Revendications

1. Procédé pour peser des animaux de boucherie (16, 18) ou des quartiers desdits animaux, qui avec une distance x entre eux sont transportés le long d'un parcours, sachant que le parcours présente au moins une section (26) comprenant un élément de pesage et que chaque animal de boucherie ou quartier dudit animal est transporté le long de ladite section ou d'une zone de pesage de ladite section avec une vitesse moyenne V₁,
**caractérisé en ce**
**que** l'animal de boucherie (16, 18) ou le quartier dudit animal est transporté avec une vitesse moyenne V₂ plus élevée que la vitesse moyenne V₁ hors de l'au moins une section (26) présentant un élément de pesage ou hors de la zone de pesage.

2. Procédé selon la revendication 1,
**caractérisé en ce**
**que** la vitesse moyenne V₂ est telle que 1,05 V₁ ≤ V₂ ≤ 4,35 V₁.

3. Procédé selon la revendication 1 ou 2,
**caractérisé en ce**
**que** sur le parcours sont aménagées n sections, où n ≥ 2, avec chacune un élément de pesage.

4. Procédé selon au moins une des revendications précédentes,
**caractérisé en ce**
**qu'**avec n sections directement alignées côte à côte avec une distance z entre les centres de deux sections successives ou une distance x entre leurs éléments de pesage avec x = z, les premiers n animaux de boucherie ou quartiers desdits animaux sont pesés simultanément, et qu'après la pesée, les animaux de boucherie ou quartiers desdits animaux sont transportés avec la deuxième vitesse moyenne V₂ sur une distance n · x, et qu'ensuite les deuxièmes n animaux de boucherie ou quartiers desdits animaux sont pesés simultanément dans les n sections.

5. Procédé selon au moins une des revendications précédentes,
**caractérisé en ce**
**que** sur le parcours sont aménagées m sections, où m ≥ 2, avec chacune un élément de pesage, que deux sections successives ou leurs éléments de pesage sont placés avec une distance u de centre à centre telle que u = (m + N) · x, où N = un nombre naturel impair, en particulier N = 1, et qu'après chaque pesée de m premiers animaux de boucherie, les animaux de boucherie sont transportés sur une distance m · x avec la deuxième vitesse moyenne V₂, pour ensuite peser m deuxièmes animaux de boucherie.

6. Dispositif pour peser des animaux de boucherie (16, 18) ou des quartiers desdits animaux, comprenant une voie de transport, telle qu'un convoyeur tubulaire (10), avec un premier convoyeur (20) associé, tel qu'un convoyeur à chaîne, au moyen duquel peuvent être transportés les animaux de boucherie ou des quartiers desdits animaux émergeant de la voie de transport avec une distance x entre eux, en particulier en étant pendus, sachant qu'au moins une section (26) de la voie de transport présente un élément de pesage, tel qu'un fléau de balance, le long duquel les animaux de boucherie ou les quartiers desdits animaux peuvent être transportés de préférence par un deuxième convoyeur (30) mobile de manière synchrone avec le premier convoyeur et associé à l'élément de pesage, en particulier intégré dans l'élément de pesage, et ce avec découplage simultané par rapport au premier transporteur,
**caractérisé en ce**
**que** n sections, où n ≥ 1, présentent chacune un élément de pesage (28), que quand n = 1, la longueur y de la section (26) ou d'une zone de pesage s'étendant dans ladite section est telle que y < x, qu'avec des sections directement successives, la distance z de centre à centre des éléments de pesage intégrés dans les sections successives est telle que z = x, et qu'avec des sections distantes les unes des autres, la distance u de centre à centre de deux sections successives ou de leurs éléments de pesage est telle que u = (n + N) · x, où N = un nombre naturel impair, et de préférence N = 1.
